# EUROPÄISCHE PATENTANMELDUNG

(11) **EP 0 829 946 A1**
(43) Veröffentlichungstag der Anmeldung: **18.03.1998**
(21) Anmeldenummer: 97115888.6
(22) Anmeldetag: 12.09.1997
(51) Int. Cl.: H02K 9/197, H02K 5/20

(54) **Dynamoelektrische Maschine mit einem flüssigkeitsdurchströmten kühlmantel**

(30) Priorität: 16.09.1996 DE 19637671
(71) Anmelder: ISAD Electronic Systems GmbH & Co.KG, 50733 Köln (DE)
(72) Erfinder: Zeyen, Klaus-Peter, 50670 Köln (DE); Pels, Thomas, 46359 Heiden (DE)
(74) Vertreter: Schneider, Egon

(57) **Zusammenfassung**

Sowohl gegenüber der zu kühlenden Maschine als auch gegenüber der Umgebung soll eine zuverlässige Dichtheit bezüglich des zu verwenden Kühlmittels gewährleistet sein. Darüber hinaus soll die Kühlvorrichtung nicht hinderlich sein, falls Reparatur- und Wartungsarbeiten an der Maschine durchzuführen sind.

Bei einer dynamoelektrischen Maschine mit einem flüssigkeitsdurchströmten, entfernbaren Kühlmantel, der die Maschine umgibt und mit einem Ein- und Auslaßkanal (14) für einen extern anschließbaren Kühlkreislauf versehen ist, ist der Kühlmantel ein enganliegendes schlauchförmiges Gebilde (12), das flexibel und elastisch ist und aus Gummi oder Silikon besteht.
Der flexible Kühlmantel kann von einem unflexiblen stützenden Gehäuse (16) umgeben und an einen Kühlkreislauf, z. B. mit einem Kondensatorsystem, angeschlossen sein.

## Beschreibung

Die Erfindung betrifft eine dynamoelektrische Maschine mit einem flüssigkeitsdurchströmten, entfernbaren Kühlmantel, nach dem Oberbegriff des Patentanspruchs 1.

Zur Beherrschung der thermischen Belastung, zur Erhaltung ausreichender Werkstoffestigkeit, Vermeidung zu starker Bauteileausdehnung mit Gefahr von Wärmespannungen müssen elektrische Maschinen gekühlt werden.

Es sind Elektromotoren vorgeschlagen worden, deren Statoren mit zahlreichen Kühlkanälen durchzogen sind. Solche Konstruktionen sind teuer. Andere Vorschläge basieren auf Flüssigkeitskühlung innerhalb der Ankerwelle. Da dies in der Regel eine externe Kühlmittelpumpe erforderlich macht, ist entsprechend einer weitergehenden Konstruktion (DE-PS 40 20 416) in der hohlen Ankerwelle eine Impellerpumpe zwecks Kühlmittelantriebs angeordnet.

Die Klasse H 02 K 9/19 beinhaltet Kühl- und Belüftungssysteme für Maschinen mit einem geschlossenen Gehäuse und mit einem daran angeschlossenen geschlossenen Kühlkreislauf unter Verwendung eines flüssigen Kühlmittels.

So beschreibt z. B. die DE-AS 21 24 463 einen hermetisch abgeschlossenen Elektromotor, der sich in einer zylindrischen Kammer mit Einlaß- und Auslaßöffnung für Kühlmittel befindet.

Der in der DE-AS 23 31 493 beschriebene Elektromotor weist ein geschlossenes Gehäuse auf, welches von einer mit Kühlmittel durchströmten Ringkammer umgeben ist.

Der Gegenstand der DE-PS 35 45 665 ist (ebenfalls) ein flüssigkeitsgekühlter Elektromotor mit einem topfförmigen Gehäuse, über welchem eine topfförmige Haube angeordnet ist. Die Haube weist einen Einlaß und einen Auslaß für eine zwischen Gehäuse und Haube zirkulierende Kühlflüssigkeit auf.

Ein bisher ungelöstes Problem bei derartigen Elektromotoren ist insbesondere darin zu sehen, daß die Dichtheit bei den zu verarbeitenden Temperaturschwankungen nur schwer zu gewährleisten ist. Da der Elektromotor zudem in eine abgeschlossene Kammer eingebaut ist, ist er für Wartungs- oder Reparaturarbeiten erst nach vollständiger Demontage der Kühlkammer zugänglich.
Insgesamt sind die bekannten Kühlkammern aufwendig und damit teuer in ihrer Herstellung.

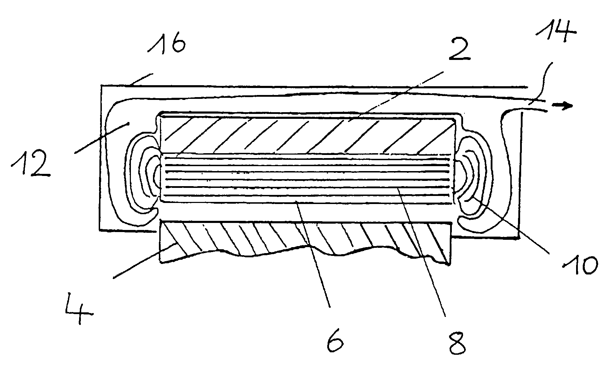

Die japanische Patentschrift 64-136002 beschreibt einen Kühlbehälter, der aus einem gut wärmeleitenden Material, insbesondere Metall, besteht. Wie die Abbildung zeigt, ist der Kühlbehälter hohlzylindrisch ausgebildet, so daß er über einen entsprechend hohlzylindrisch ausgebildeten Motor geschoben werden kann.
Das verwendete Metall ist üblicherweise praktisch nicht flexibel und somit auch nicht geeignet, sich den verschiedensten Formen eng anzuschmiegen. Der japanische Kühlzylinder ist allenfalls etwas federnd, da es sich hier um einen längsgeschlitzten Hohlzylinder handelt. Die Kombination: Längsschlitz und Federwirkung ist aber keinesfalls geeignet, sich komplizierter geformten Gebilden mit Vorsprüngen und dergleichen eng anzuschmiegen.

Bei der in der US-Patentschrift 4.213.498 beschriebenen Kühlvorrichtung handelt es sich um einen einfachen, flexiblen, schwach dehnbaren, flüssigkeitsdurchströmten und als Kühlmanschette ausgebildeten Wärmetauscher aus Plastik. Auch die US-PS 4.971.144 hat eine Kühlmanschette zum Gegenstand. Die in beiden US-Patenten beschriebenen Kühlmanschetten bestehen aus einer unteren und einer oberen Lage und einem dazwischen befindlichen Kanalsystem. Duch dieses Kanalsystem ist der Abstand zwischen oberer und unterer Lage fest vorgegeben.
Gemäß der US-PS 4.213.498 besteht der Wärmetauscher aus Kunststoff, z. B. Polypropylen oder Polyäthylen. Der Wärmetauscher ist zwar flexibel, das Plastikmaterial ist aber nur gering dehnbar. Wegen der nur geringen Dehnbarkeit des Materials und wegen des Aufbaus des Wärmetauschers mit dem konstanten Abstand zwischen Unter- und Oberlage ist der Wärmetauscher lediglich geeignet, sich zylinderförmigen Oberflächen, z. B. von Fässern und Tanks, anzupassen. Halbkugelige oder sonstige reliefartige Oberflächen können nicht ganzflächig umschlungen werden.

Die Aufgabe der vorliegenden Erfindung besteht darin, eine einfach und preiswert herstellbare Kühlvorrichtung für eine elektrische Maschine zu beschreiben. Sowohl gegenüber der zu kühlenden Maschine als auch gegenüber der Umgebung soll eine zuverlässige Dichtheit bezüglich des zu verwendenden Kühlmittels gewährleistet sein. Darüber hinaus soll die Kühlvorrichtung nicht hinderlich sein, falls Reparatur- oder Wartungsarbeiten an der Maschine durchzuführen sind.

Bei einer dynamoelektrischen Maschine mit einem flüssigkeitsdurchströmten Kühlmantel wird diese Aufgabe ddurch die Merkmale des Anspruchs 1 gelöst. Die beiden Unteransprüche geben Details von bevorzugten Ausführungsformen an.

Entsprechend der Lösung der Erfindung ist der flüssigkeitsdurchströmte Kühlmantel ein enganliegendes schlauchförmiges Gebilde (Kühl-"Sack"/Schlauch) aus flexiblem Material. Da der erfindungsgemäße Kühlmantel aus Gummi oder Silikon besteht, ist er aber nicht nur flexibel sondern in beträchtlichem Maße auch dehnbar. Aus diesem Grunde kann sich der Kühlmantel den unterschiedlichst gestalteten Oberflächen eng anschmiegen.
Diese Anpassungsfähigkeit an beliebig gestaltete Oberflächen wird noch weiter erleichtert, da beim erfindungsgemäßen Kühlmantel obere und untere Mantelschicht nicht fest miteinander verbunden sind. Somit braucht sich lediglich die dem zu kühlenden Körper zugewandte Mantelfläche der jeweiligen Oberflächengestalt anzupassen. Hierdurch ist eine gute Wärmeübertragung gewährleistet. Wegen der Flexibilität ist eine leichte Montage und Demontage, z. B. bei einer Reparatur an der Maschine, möglich.

Das bei starren Kühlmänteln auftretende Dichtheitsproblem wegen unterschiedlicher Wärmeausdehnungen der unterschiedlichen Materialien der einzelnen Bauteile tritt hier nicht auf. Der flexible Kühlsack gibt nach und paßt sich der thermischen Ausdehnung unterschiedlicher Materialien der zu kühlenden Maschine an . D. h.: Im Gegensatz zu starren Kühlmänteln gibt es deshalb bei dem erfindungsgemäßen flexiblen Kühlmantel offensichtlich keine Dichtheitsprobleme, insbesondere gegenüber der elektrischen Maschine.

Ein- und Auslaß-Öffnungen bzw. -Schlauchenden sind vorzugsweise anvulkanisiert. Eine Weiterführung des Kühlmediums an einen entfernt angeordneten Wärmeaustauscher ist damit problemlos möglich. Insbesondere beim Einsatz in einem Kraftfahrzeug ist eine Anbindung der erfindungsgemäßen Kühlung an die Kühlung des Verbrennungsmotors möglich.

Das flexible schlauchförmige Gebilde kann drucklos oder druckstabil ausgeführt sein. Ist das flexible Gebilde druckstabil, so kann es in einem druckstabilen Festigkeitsträger untergebracht sein. Bei Druckbeaufschlagung des flexiblen Kühlsacks ergibt sich somit ein fester Sitz auf der zu kühlenden elektrischen Maschine und damit eine besonders zuverlässige Wärmeübertragung.

Bei Verwendung eines verdampfenden Kühlmediums kann eine weitere Intensivierung der Wärmeabgabe erreicht werden, wenn der Kühlkreislauf an ein Kondensatorsystem angeschlossen ist.

Nachfolgend wird ein Ausführungsbeispiel anhand der beigefügten Zeichnung erläutert.

Eine herkömmliche Maschine ist ausschnittsweise im Längsschnitt dargestellt.
Dabei ist der Stator der Maschine, bzw. das Statorblechpaket, mit 2 beziffert. Der Rotor, bzw, das Rotorblechpaket, ist mit der Nummer 4 markiert. Das Statorblechpaket 2 weist Nuten 6 auf und ist mit den Wicklungen 8 versehen. An den Enden des Stators 2 ragen die Wickelköpfe 10 über das Statorblechpaket 2 hinaus.

Über den Stator 2 einer solchen herkömmlichen dynamoelektrischen Maschine ist ein erfindungsgemäßes flexibles schlauchförmiges Gebilde, Kühl-("Sack")/Schlauch, 12 gestülpt. Dieser Kühl-("Sack")/Schlauch 12 ist enganliegend, weist einen Ein- und einen Auslaß 14 auf und ist damit an einen Kühlkreislauf (nicht dargestellt) angeschlossen.

Der Kühl-("Sack")/Schlauch 12 besteht aus einem flexiblen Material, z. B. Gummi oder Silikon.

Um eine besonders gute Wärmeübertragung zu erzielen, ist der flexible Kühl-("Sack")/Schlauch 12 druckstabil ausgeführt. In Ergänzung mit einem darüber angeordneten drucksteifen Gehäuse 16 ist stets eine enganliegende Umschlingung und damit eine gute Wärmeübertragung vom Stator 2 zum Kühl-("Sack")/Schlauch 12 gewährleistet.

### Bezugszeichenliste

- 2: Stator(-blechpaket)
- 4: Rotor(-blechpaket)
- 6: Nut
- 8: Wicklungen
- 10: Wickelköpfe
- 12: schlauchförmiges Gebilde (Kühl-"Sack"/Schlauch)
- 14: Ein- bzw. Auslaßkanal zum Kühlkreislauf
- 16: Gehäuse

## Patentansprüche

1. Dynamoelektrische Maschine mit einem flüssigkeitsdurchströmten, entfernbaren Kühlmantel, der die Maschine umgibt
und mit einem Ein- und einem Auslaßkanal (14) für einen extern anschließbaren Kühlkreislauf versehen ist,
**dadurch gekennzeichnet**,
daß der Kühlmantel ein enganliegendes schlauchförmiges Gebilde (12) aus flexiblem, elastischem Material ist und aus Gummi oder Silikon besteht.

2. Dynamoelektrische Maschine nach Anspruch 1,
**dadurch gekennzeichnet**,
daß das Gebilde (12) drucklos oder druckstabil ausgeführt ist und zumindest teilweise von einem unflexiblen stützenden Gehäuse (16) umgeben ist.

3. Dynamoelektrische Maschine nach Anspruch 1 oder 2,
**dadurch gekennzeichnet**,
daß der Kühlkreislauf ein Kondensatorsystem bildet.
